Europäisches Patentamt

European Patent Office

Office européen des brevets

(19)

(11) Veröffentlichungsnummer: **0 170 165**
**B1**

(12) **EUROPÄISCHE PATENTSCHRIFT**

(45) Veröffentlichungstag der Patentschrift: **19.12.90**

(51) Int. Cl.⁵: **G 01 N 29/04**

(21) Anmeldenummer: **85108999.5**

(22) Anmeldetag: **18.07.85**

(54) Ultraschall-Prüfeinrichtung.

(30) Priorität: **30.07.84 DE 3428056**

(43) Veröffentlichungstag der Anmeldung:
**05.02.86 Patentblatt 86/06**

(45) Bekanntmachung des Hinweises auf die
Patenterteilung:
**19.12.90 Patentblatt 90/51**

(84) Benannte Vertragsstaaten:
**BE CH DE FR IT LI NL SE**

(56) Entgegenhaltungen:
**GB-A-1 168 881**
**US-A-3 950 660**
**US-A-4 365 515**

(73) Patentinhaber: **Siemens Aktiengesellschaft**
**Wittelsbacherplatz 2**
**D-8000 München 2 (DE)**

(72) Erfinder: **Ruthrof, Klaus**
**Kosbacher Weg 57**
**D-8520 Erlangen (DE)**
Erfinder: **Hölzler, Georg, Dipl.-Ing.**
**Kellergasse 18**
**D-8521 Möhrendorf (DE)**
Erfinder: **Körner, Rudolf**
**Hangstrasse 1**
**D-8566 Leinburg (DE)**

Courier Press, Leamington Spa, England.

**Beschreibung**

Die Erfindung betrifft eine Ultraschall-Prüfeinrichtung mit einem Prüfkopf, der einen elektromechanischen Wandler, insbesondere einen piezoelektrischen Schwinger umfaßt, mit einem Ultraschallgerät und mit einem abgeschirmten Kabel, das den Prüfkopf mit dem Ultraschallgerät verbindent, wobei der Prüfkopf zwei den Wandler topfförmig umschließende elektrisch leitende Abschirmungen aufweist (siehe US—A— 4 365 515).

Die Erfindung geht von der Aufgabe aus, die Störanfälligkeit der vorgenannten Prüfeinrichtung zu verringern Dehn trotz des abgeschirmten Kabels kann es zu Fehlersignalen aufgrund elektrischer und/oder elektromagnetischer Störfelder kommen. Solche Störfelder können schon durch relativ schwache fremde Hochfrequenzeinstrahlungen, zum Beispiel durch Funk, aber auch durch Lichtbogenschweißgeräte usw., verursacht werden. Die Störungen werden dabei induktiv und/oder kapazitiv oder galvanisch eingekoppelt und verfälschen das Ultraschallmeßsignal.

Erfindungsgemäß ist vorgesehen, daß die beiden Abschirmungen mit den äußeren Leitern des dreifach koaxialen Kabels verbunden sind und daß mindestens der äußerste Leiter des Kabels mit einem Metallgehäuse des Ultraschallgerätes verbunden und geerdet ist.

Mit der Erfindung wird eine weitgehende Entkopplung der Prüfeinrichtung von äußeren Störfeldern erreicht.

Dies ist deswegen erstaunlich, weil man erstens glaubte, mit einem abgeschirmten Kabel in dieser Hinsicht genug getan zu haben, und weil zweitens die erfindungsgemäße weitere Abschirmung trotz ihrer unaufwendigen Ausbildung auch unter bisher aussichtlosen Umständen einwandfreie Messungen und Prüfungen erlaubt.

Als Abschirmungen des Prüfkopfes können vorteilhaft elektrisch leitende Folien oder leitfähig beschichtete Kunststoffe dienen, die gegebenenfalls durch thermoplastische Verformung oder durch kaltes Recken so dicht auf Isolierstoffteile des Prüfkopfes aufgebracht werden können, daß ein fester Hält entsteht. Die Abschirmungen können aber auch aufgeklebt werden. In jedem Falle ist es günstig, wenn das Kabel mit den Abschirmungen des Prüfkopfes und dem Metallgehäuse des Ultraschallgeräts über Steckkontakte verbunden ist, weil dies den Auf- und Abbau der Prüfeinrichtung erleichtert. Außerdem können mit Hilfe der Steckkontakte Messungen der elektrischen Werte des Prüfkopfes und des Kabels zum Beispiel zur Justierung vorgenommen werden.

Eine bei Erprobungen besonders bewährte Ausbildung der erfindungsgemäßen Prüfeinrichtung besteht darin, daß als Abschirmungen des Prüfkopfes formsteife Metallbecher dienen.

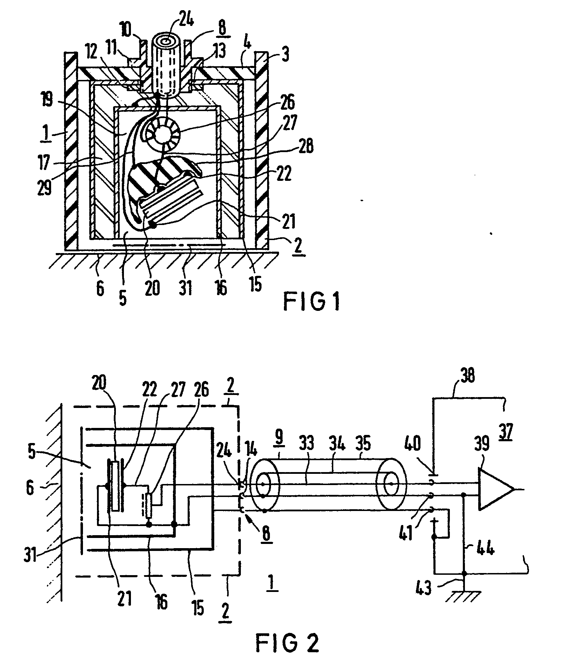

Diese Ausbildung wird zusammen mit weiteren Einzelheiten der Erfindung aus der folgenden Beschreibung von Ausführungsbeispielen anhand der beiliegenden Zeichnung noch näher ersichtlich. Dabei zeigt die Fig. 1 einen Schnitt durch einen Prüfkopf, und die Fig. 2 zeigt den Anschluß des Prüfkopfes an ein Ultraschallgerät.

In Fig. 1 ist die konstruktive Gestaltung einer "triaxialen" Ausführung eines Ultraschallprüfkopfes 1 dargestellt, der in einem Kernkraftwerk zu empfindlichen Messungen auch dann eingesetzt werden kann, wenn wegen der gewünscht kurzen Stillstandszeiten gleichzeitig mit stromstarken Lichtbogenschweißgeräten gearbeitet wird und Funksprechgeräte in unmittelbarer Nachbarschaft betrieben werden. Der Prüfkopf 1 hat ein Isolierstoffgehäuse 2, das aus einem zylindrischen Mantel 3 und einem ebenen Boden 4 zu einem einseitig offenen Topf zusammengesetzt ist. Die für den Schallaustritt vorgesehen Öffnung 5 des Topfes ist der Oberfläche der zu prüfenden Kraftwerkskomponente 6, zum Beispiel einer druckführenden Rohrleitung, zugekehrt.

In der Mitte des Bodens 4 sitzt einer Triaxbuchse 8 zum Anschluß eines Triaxkabels 9 (Fig. 2). Sie umfaßt einen rotationssymmetrischen Isolierstoffkörper 10, der mit einem Bund 11 und einer Befestigungsmutter 12 am Boden 4 festgeklemmt wird. Die Mutter 12 ist auf eine Gewindestutzen 13 des Isolierstoffkörpers 10 aufgeschraubt. In dem Isolierstoffkörper sitzen Steckkontakte 14.

Mit der Befestigungsmutter 12 kann eine als formsteifer Metallbecher 15 ausgebildete, zum Beispiel aus Aluminium oder Kupferblech tiefgezogene erste topfförmige Abschirmung befestigt sein, die konzentrisch zum Gehäuse 2 angeordnet ist. Diese erste Abschirmung 15 umschließt eine zweite topfförmige Abschirmung 16, die wiederum konzentrisch angeordnet ist und ebenfalls als Metallbecher ausgebildet sein kann. Der Ringraum 17 zwischen den Abschirmungen 15, 16 hat eine Dicke von etwa 1/4 bis 1/10 des kleineren Topfdurchmessers und kann mit einem isolierenden Kunststoff, vorzugsweise einem gummielastischen Schaumstoff, ausgefüllt sein, der ein lösbares Verklemmen der Abschirmungen 15, 16 ermöglicht, aber auch eine hochohmige Isolierung (>20 MΩ) sicherstellt.

Im Inneren 19 der Abschirmung 16 befindet sich ein piezoelektrischer Schwinger 20 mit den Belägen 21 und 22 auf beiden Seiten. Von diesen ist im Gegensatz zu üblichen Ausführungen der dem Topfinneren zugekehrte Belag 22 mit dem Mittelleiter 24 der Triaxbuchse 8 verbunden. Der dem Prüfling 6 zugekehrte Belag 21 ist dagegen mit der Abschirmung 16 verbunden und zusammen mit dieser an Masse gelegt und/oder geerdet. Damit wird insbesondere die kapazitive Einkopplung von Störfeldern wesentlich verringert.

Der "heiße" Belag 22 ist beim Ausführungsbeispiel nach Fig. 1 über einen zur Anpassung an das Kabel 9 dienenden Übertrager 26 an den Mittelleiter 24 angeschlossen. Der Übertrager 26 liegt ebenfalls abgeschirmt im Topfinneren 19. Zur Verringerung von induktiven Einkopplungen kann man auch magnetische Abschirmungen des Übertragers 26 vorsehen, zum Beispiel den Topf 16 aus ferromagnetischem Material herstellen.

Ferner ist im Inneren 19 im Bereich des Schwingers 20 und der zu dem Belag 22 führenden Anschlußleitung 27 eine elektrisch leitende Dämpfungsmasse 28 vorgesehen, die zum Beispiel aus knetbarem Kunststoff mit leitfähigen Partikeln, zum Beispiel Grafit- oder Metallpulver besteht. Die Dämpfungsmasse 28 kann durch einen Anschlußleiter 29 auf das Potential der Abschirmung 16 gebracht sein, wenn sonst keine ausreichende Verbindung vorhanden ist. Vor allem aber kann die Dämpfungsmasse 28 bei genügender Leitfähigkeit und geeigneter, den Schwinger 20 topfförmig einschließender Form die Abschirmung 16 ersetzen. Der Belag 22 und die Anschlußleitung 27 tragen dann eine ausreichende elektrische Isolierung.

Zur Vervollständigung der Abschirmung gegen Störfelder im Bereich der Ultraschall-Prüfeinrichtung kann der Prüfkopf 1 an der für den Schallaustritt vorgesehenen Öffnung 5 der topfförmigen Abschirmungen 15, 16 mit einer elektrisch leitenden akustischen λ/4-Schicht 31 abgeschlossen sein, die aus ferromagnetischem Werkstoff etwa in Form einer Metallfolie besteht. Die Dicke der Schicht 31 kann auch einem ungeradzahligen Vielfachen von λ/4 entsprechen, um eine wirksame elektrische und/oder elektromagnetische Abschirmung zu erhalten. Ähnliche Wirkungen kann man bei kleineren Schichtdicken als λ/4 auch zum Beispiel durch das Aufdampfen von elektrisch leitenden Materialien erhalten. Die Abschirmung 31 kann sich ferner über die beiden Abschirmtöpfe 15 und 16 erstrekken, wie in Fig. 2 angedeutet ist.

Das an die Triaxbuchse 8 angeschlossene Kabel 9 besitzt einen Mittelleiter 33 und zwei diesen mit dem notwendigen Isolationsabstand konzentrisch umgebende Abschirmleiter 34 und 35. Diese drei Leiter 33, 34 und 35 sind über die Steckkontakte 14 mit dem Belag 22, mit dem Belag 21 und der Abschirmung 16 bzw. mit der Abschirmung 15 verbunden.

Das andere Ende des Kabels 9 führt zu einem Ultraschallgerät 37, von dem in Fig. 2 nur das Metallgehäuse 38 und ein Eingangsverstärker 39 angedeutet ist. In dem Gehäuse 38 sitzt ein Triaxstecker 40 mit Steckkontakten 41 zur Verbindung des Kabels 9 mit dem Ultraschallgerät 37. Dabei führt der Leiter 35 zum Metallgehäuse 38 und über dieses zur Erdung 43. Der innere Abschirmungsleiter 34 ist mit dem Verstärker 39 verbunden und über die Leitung 44 geerdet. Der Mittelleiter 33 führt ebenfalls zum Verstärker 39.

## Patentansprüche

1. Ultraschall-Prüfeinrichtung mit einem Prüfkopf (1), der einen elektro-mechanischen Wandler (20), insbesondere einen piezoelektrischen Schwinger, umfaßt, mit einem Ultraschallgerät (37) und mit einem abgeschirmten Kabel (9), das den Prüfkopf (1) mit dem Ultraschallgerät (37) verbindet, wobei der Prüfkopf (1) zwei den Wandler (20) topfförmig umschließende elektrisch leitende Abschirmungen (15, 16) aufweist, dadurch gekennzeichnet, daß die beiden Abschirmungen (15, 16) mit den äußeren Leitern (34, 35) des dreifach koaxialen Kabels (9) verbunden sind, und daß mindestens der äußerste Leiter (35) des Kabels (9) mit einem Metallgehäuse (38) des Ultraschallgerätes (37) verbunden und geerdet ist.

2. Ultraschall-Prüfeinrichtung nach Anspruch 1, dadurch gekennzeichnet, daß das Kabel (9) mit den Abschirmungen (15, 16) des Prüfkopfes (1) und dem Metallgehäuse (38) des Ultraschallgeräts (37) über Steckkontakte (14, 41) verbunden ist.

3. Ultraschall-Prüfeinrichtung nach Anspruch 1 oder 2, dadurch gekennzeichnet, daß als Abschirmungen (15, 16) des Prüfkopfes (1) elektrisch leitende Folien oder leitfähig beschichtete Kunststoffe dienen.

4. Ultraschall-Prüfeinrichtung nach Anspruch 1 oder 2, dadurch gekennzeichnet, daß als Abschirmungen des Prüfkopfes (1) formsteife Metallbecher dienen.

5. Ultraschall-Prüfeinrichtung nach einem der Ansprüche 1 bis 4, dadurch gekennzeichnet, daß der Wandler (20) mit seiner mit dem Mittelleiter (33) des Kabels (9) verbundenen Seite (22) dem Boden de von den Abschirmungen (15, 16) gebildeten Topfes zugekehrt ist und daß die dem Boden abgekehrte Schwingerseite (21) mit der inneren Abschirmung (16) verbunden und/oder geerdet ist.

6. Ultraschall-Prüfkopf nach einem der Ansprüche 1 bis 5, dadurch gekennzeichnet, daß die Schallaustrittsöffnung (5) mit einer dünnen, elektrisch leitenden Schicht (31) abgeschirmt ist.

7. Ultraschall-Prüfkopf nach Anspruch 6, dadurch gekennzeichnet, daß die Schicht (31) aufgedampft ist.

8. Ultraschall-Prüfkopf nach Anspruch 6 oder 7, dadurch gekennzeichnet, daß die Schicht (31) eine akustische λ/4-Schicht ist.

9. Ultraschall-Prüfkopf nach einem der Ansprüche 1 bis 8, dadurch gekennzeichnet, daß die Abschirmungen (15, 16) einen Topf- oder Ringkern-Übertrager (26) einschließen, der zwischen dem Schwinger (20) und dem Kabel (9) liegt.

## Revendications

1. Dispositif de contrôle par ultrasons comportant une tête de contrôle (1), qui contient un transducteur électromécanique (20), notamment un oscillateur piézoélectrique, et un appareil à ultrasons (37) et un câble blindé (9), qui relie la tête de contrôle (1) à l'appareil à ultrasons (37), et dans lequel la tête de contrôle (1) comporte deux blindages électriquement conducteurs (15, 16), qui entourent sous la forme d'un pot le transducteur (20), caractérisé par le fait que les deux blindages (15, 16) sont reliés aux conducteurs extérieurs (34, 35) du câble triplement coaxial (9), et qu'au moins le conducteur extérieur (35) du câble (9) est relié au boîtier métallique (38) de l'appareil à ultrasons (37) et est raccordé à la terre.

2. Dispositif de contrôle par ultrasons suivant la revendication 1, caractérisé par le fait que le câble (9) est relié aux blindages (15, 16) de la tête de contrôle (1) et au boîtier métallique (38) de l'appareil à ultrasons (37) par l'intermédiaire de contacts enfichables (14, 41).

3. Dispositif de contrôle par ultrasons suivant la revendication 1 ou 2, caractérisé par le fait qu'on utilise comme blindages (15, 16) de la tête de contrôle (1), des feuilles électriquement conductrices ou des matières plastiques recouvertes d'un placage les rendant conductrices.

4. Dispositif de contrôle à ultrasons suivant la revendication 1 ou 2, caractérisé par le fait qu'on utilise comme blindages de la tête de contrôle (1), des pots métalliques de forme rigide.

5. Dispositif de contrôle à ultrasons suivant l'une des revendications 1 à 4, caractérisé par le fait que le côté (22) du transducteur (20), qui est relié au conducteur central (33) du câble (9), est tourné vers le fond du pot formé par les blindages (15, 16), et que le côté (21) de l'oscillateur, tourné à l'opposé du fond, est relié au blindage intérieur (16) et/ou est raccordé à la terre.

6. Tête de contrôle par ultrasons suivant l'une des revendications 1 à 5, caractérisée par le fait que l'ouverture (5) de sortie des ultrasons est blindée par une couche mince électriquement conductrice (31).

7. Tête de contrôle par ultrasons suivant la revendication 6, caractérisée par le fait que la couche (31) est déposée par évaporation.

8. Tête de contrôle par ultrasons suivant la revendication 6 ou 7, caractérisée par le fait que la couche (31) est une couche acoustique ($\lambda$/4).

9. Tête de contrôle par ultrasons suivant l'une des revendications 1 à 8, caractérisée par le fait que les blindages (15, 16) renferment un transformateur à noyau en forme de pot ou à noyau annulaire (26), situé entre l'oscillateur (20) et le câble (9).

**Claims**

1. Ultrasonic testing device having a probe (1), which comprises an electromechanical transducer (20), more particularly a piezoelectric oscillator, having an ultrasonic unit (37) and having a shielded cable (9) which connects the probe (1) with the ultrasonic unit (37), with the probe (1) having two electrically conductive shields (15, 16) which surround the transducer (20) in a pot-like manner, characterised in that the two shields (15, 16) are connected with the outer conductors (34, 35) of the triply coaxial cable (9) and in that at least the outermost conductor (35) of the cable (9) is connected with a metal housing (38) of the ultrasonic unit (37) and is earthed.

2. Ultrasonic testing device according to claim 1, characterised in that the cable (9) is connected with the shields (15, 16) of the probe (1) and the metal housing (38) of the ultrasonic unit (37) by way of plug-in contacts (14, 41).

3. Ultrasonic testing device according to claim 1 or 2, characterised in that electrically conductive foils or conductively coated plastics materials are used as shields (15, 16) of the probe (1).

4. Ultrasonic testing device according to claim 1 or 2, characterised in that dimensionally stable metal cups are used as shields of the probe (1).

5. Ultrasonic testing device according to one of the claims 1 to 4, characterised in that the transducer (20) with its side (22) connected with the middle conductor (33) of the cable (9) faces the base of the pot formed by the shields (15, 16) and in that the oscillator side (21) remote from the base is connected with the inner shield (16) and/or earthed.

6. Ultrasonic probe according to one of the claims 1 to 5, characterised in that the sound discharge opening (5) is shielded with a thin electrically conductive layer (31).

7. Ultrasonic probe according to claim 6, characterised in that the layer (31) is vapour-deposited thereon.

8. Ultrasonic probe according to claim 6 or 7, characterised in that the layer (31) is an acoustic $\lambda$/4-layer.

9. Ultrasonic probe according to one of the claims 1 to 8, characterised in that the shields (15, 16) contain a pot-type or annular core transformer (26) which lies between the oscillator (20) and the cable (9).

FIG 1

FIG 2